# EUROPÄISCHE PATENTSCHRIFT

(11) **EP 4 159 091 B1**
(45) Veröffentlichungstag und Bekanntmachung des Hinweises auf die Patenterteilung: **06.11.2024**
(21) Anmeldenummer: 22197636.8
(22) Anmeldetag: 26.09.2022
(51) Int. Cl.: A47C 7/00, A47C 9/00, A47C 3/18, A47C 3/30, B60B 33/00

(54) **STUHL, INSBESONDERE HOCHSTUHL, MIT ZWEI ZUSTÄNDEN**
CHAIR, IN PARTICULAR HIGH CHAIR, WITH TWO STATES
CHAISE, EN PARTICULIER CHAISE HAUTE, À DEUX ÉTATS

(30) Priorität: 29.09.2021 DE 102021210905
(43) Veröffentlichungstag der Anmeldung: 05.04.2023
(73) Patentinhaber: Sedus Stoll AG, 79804 Dogern (DE)
(72) Erfinder: DAUR, Judith, 79761 Tiengen (DE); FISCHER, Harry, 79793 Degernau (DE); MAIER, Klaus, 79875 Dachsberg (DE)
(74) Vertreter: Isarpatent

(56) Entgegenhaltungen:
- EP-A1- 2 446 781
- DE-A1- 2 528 980
- US-A- 5 992 815
- US-A1- 2015 305 961

## Beschreibung

### GEBIET DER ERFINDUNG

Die vorliegende Erfindung betrifft einen Stuhl, insbesondere einen Hochstuhl.

### TECHNISCHER HINTERGRUND

Zum vereinfachten Transportieren oder horizontalen Bewegen von Stühlen existieren verschiedene Mechanismen, wie etwa Schienen, Gleiter, Rollen, etc. Die vorliegende Erfindung befindet sich im Umfeld von über Rollen bewegbaren Stühlen. Ein derartiger Stuhl, beispielsweise ein Bürodrehstuhl, kann insbesondere ein so genanntes Fußkreuz mit mehreren Armen aufweisen, welches die Stuhlbasis bildet und an deren jeweiligen Enden so genannte Lenkrollen angebracht sind. Die Mitte des Fußkreuzes nimmt in der Regel eine Gasdruckfeder auf, mit der sich die Sitzhöhe eines Bürodrehstuhls leichter und schneller, als mit einem Gewinde, verstellen lässt. Auf dem oberen Ende der Gasdruckfeder eines solchen Stuhls lagert eine Stuhlmechanik mit Sitz, Rückenlehne und gegebenenfalls Armlehnen.

Obgleich die vorliegende Erfindung und die ihr zugrundeliegende Problematik nachfolgend mit Bezug auf einen als Hochstuhl ausgebildeten Bürodrehstuhl erläutert wird, ist sie nicht darauf beschränkt, sondern lässt sich auf beliebige, mit Fußkreuzen ausgestattete Stühle gleichermaßen anwenden.

Während bei herkömmlichen Stühlen die Beine einer auf dem Stuhl sitzenden erwachsenen Person in der Regel bis zum Fußboden reichen, ist dies bei einem so genannten Hochstuhl aufgrund einer erhöhten Sitzposition nicht gewährleistet. Für diese Zwecke ist daher meist ein Fußring vorgesehen, auf dem die Füße abgesetzt werden können. Allerdings können, bei einem solchen mit Fußrollen ausgestatteten Hochstuhl, die Füße bzw. die Beine nicht mehr zum Bewegen und vor allem Bremsen des Stuhls verwendet werden. Um ein unkontrolliertes Bewegen des Stuhls zu vermeiden, müssen solche Stühle zwingend einen Wegrollschutz aufweisen. Oftmals ist der Wegrollschutz durch gebremste Rollen realisiert, welche gewichtsabhängig gesteuert sind. Solche gebremsten Rollen, die auch als Brems-Stopp-Rollen bezeichnet werden, werden gebremst, sofern eine Person auf dem Sitz sitzt und damit das Fußkreuz und mithin die daran angebrachten Rollen mit ihrem Gewicht belastet. Im Nichtgebrauchszustand ist der Sitz entlastet und die Rollen werden nicht gebremst, sodass der Stuhl von einer Person weggerollt werden kann.

Problematisch daran ist ein Zustand, sofern die sitzende Person nicht zentral auf dem Stuhl sitzt, sondern daran anlehnt oder sich durch Sitzverlagerung der Schwerpunkt verlagert. In diesem Fall kann es durch die damit einhergehende Belastungsverlagerung dazu kommen, dass einzelne Rollen freigegeben und somit nicht mehr gebremst werden, und der Stuhl über die nicht mehr gebremsten Rollen ggfs. Wegrutscht. Dies ist insbesondere bei als Hochstühlen ausgebildeten Bürodrehstühlen problematisch, bei welchen eine Person den Stuhl auch im quasi-stehenden Zustand, zum Beispiel als Sitzhocker oder Sitzstütze, verwenden kann.

Zusätzlich ist bei üblichen lastabhängig gebremsten Rollen die Bremswirkung, unabhängig von der Sitzhöhe und damit der Nutzung, immer wirksam.

Die US 2015/0305961 A1 beschreibt einen therapeutischen Massagestuhl. Feststellbare Rollen ermöglichen es dem Stuhl, sich in belebten Umgebungen zu bewegen, jedoch bei Bedarf an der Position des Stuhls zu fixieren.

Die EP 2 446 781 A1 betrifft einen Stuhl mit einem SitzTräger, einem Sitz und einer Stuhl-Säule, die durch einen betätigbaren Hub-Aktuator längenverstellbar ist. Ferner umfasst der Stuhl ein Fuß-Gestell, das mindestens eine FahrRollen-Einheit zum Verschieben des Stuhls aufweist, und eine Brems-Vorrichtung zum Unterbinden des Wegfahrens des Stuhls auf dem Boden, wobei die Brems-Vorrichtung durch den Hub-Aktuator in eine Freigabe-Stellung bringbar ist.

US 5,992,815 A offenbart eine höhenverstellbare Säule.

DE 25 28 980 A1 bezieht sich auf ein blockierbares Hubaggregat zur Höheneinstellung von Stuhlsitzen.

Ein alternatives Beispiel für einen mit einem Wegrollschutz ausgestatteten Stuhl ist in der DE 10 2008 009 413 A1 beschrieben. Der dort beschriebene Stuhl weist einen Stuhlfuß auf, der bei rollenbesetzten Hochstühlen mit erhöhter Sitzfläche, wie sie u.a. im Büro oder der Produktion verwendet wird, zum Einsatz kommt. Der Wegrollschutz umfasst einen zentral unter dem Stuhlfuß angeordneten, massiv ausgebildeten Stopper, in Form eines Stempels, sowie eine Betätigungseinrichtung. Zum Zwecke des Bremsens des Stuhls wird der Stopper mittels der Betätigungseinrichtung gegen den Fußboden gedrückt und bremst somit den gesamten Stuhl aufgrund der Reibkraft zwischen Stopper und Fußboden. Zur Verbesserung der Bremswirkung kann die Kontaktfläche des Stoppers mit einem Material ausgestattet sein, das einen besonders hohen Reibungskoeffizient aufweist. Nachteilig werden die Rollen durch den Stopper entlastet, was ggfs. die Stabilität des Stands beeinträchtigen kann. Zusätzlich sind die Rollen bei einem solchem Wegrollschutz nicht gegen eine Verdrehung gesichert, was ggfs. eine ungewollte Verschiebung des Stuhls erleichtert. Neben dem weiterhin relativ hohen Gewicht des Stoppers ist diese Art eines Wegrollschutzes für den Betrachter auch ohne weiteres sichtbar und aus ästhetischen Gründen nicht sehr vorteilhaft.

### ZUSAMMENFASSUNG DER ERFINDUNG

Vor diesem Hintergrund liegt der vorliegenden Erfindung die Aufgabe zugrunde, einen Stuhl mit einer verbesserten und sichereren Wegrollschutzmechanik, insbesondere mit zwei Zuständen des Sitzens und des Lehnens, anzugeben.

Erfindungsgemäß wird diese Aufgabe durch einen Stuhl mit den Merkmalen des Patentanspruchs 1 gelöst.

Demgemäß ist vorgesehen:
- Ein Stuhl, insbesondere Hochstuhl, mit einem Fußkreuz, an welchem mehrere Lenkrollen angebracht sind, mit einer Wegrollschutzmechanik, die eine zentrale Schaltvorrichtung sowie zumindest ein Bremsmittel aufweist, wobei das zumindest eine Bremsmittel mit einer ihm zugeordneten Lenkrolle gekoppelt ist und wobei die Schaltvorrichtung derart angeordnet und mit dem zumindest einen Bremsmittel gekoppelt ist, um die zumindest eine Lenkrolle in einem ersten Zustand über das ihr zugeordnete Bremsmittel zu bremsen und in einem zweiten Zustand die zumindest eine Lenkrolle freizugeben.

Die der vorliegenden Erfindung zugrundeliegende Erkenntnis besteht darin, dass ein Stuhl mit Wegrollschutzmechanik unabhängig von einer Gewichtsbeaufschlagung durch eine auf dem Stuhl sitzende Person zwei Zustände aufweisen sollte, wobei er in einem ersten Zustand gebremst ist und in einem zweiten Zustand bewegt werden kann. Vorteilhafterweise kann der Stuhl so in der unteren bzw. normalen Sitzposition leichtverschiebbar Stuhl und in der oberen Sitzposition als Hochstuhl mittels der Wegrollschutzmechanik vollständig blockiert sein.

Die der Erfindung zugrundeliegende Idee besteht nun darin, einen über eine zentrale Schaltvorrichtung zuschaltbaren Wegrollschutz über die mit Bremsmitteln bremsbaren Lenkrollen zu ermöglichen. Die Schaltvorrichtung kann entweder durch eine kinematische Kopplung mit einer Höhenverstellung des Sitzes oder ggfs. auch manuell betätigbar ausgebildet sein und ist somit unabhängig von einer Gewichtsbeaufschlagung. Vorteilhaft ist auf diese Weise ein gewichtsunabhängiger und dennoch einfach und bei Bedarf automatisiert zu bedienender Wegrollschutz bereitgestellt. Ferner wird somit ein Stuhl bereitgestellt, der zwei Stuhlpositionen ermöglicht: Bei niedriger Einstellung des Sitzes sitzen und bei oberer Einstellung des Sitzes lehnen.

Des Weiteren ist der Stuhl vor einem Wegrollen geschützt, ohne die Verwendung eines zusätzlichen zum Boden kontaktherstellenden Bauteils, wie eines Stempels, Stoppers oder dergleichen. Ein derartiges Bauteil, welches massiv ausgebildet sein müsste, würde neben dem Designaspekt sowie hinsichtlich des Gewichts die Lenkrollen des Fußkreuzes statisch entlasten und so unter Umständen die Stabilität des Stands negativ beeinflussen. Vielmehr wird erfindungsgemäß eine Bremswirkung über die ohnehin in Bodenkontakt stehenden Lenkrollen, jedoch ohne eine Gewichtsbelastungsabhängigkeit ausgeübt, sodass die genannten negativen Auswirkungen vermieden werden.

Ferner ist erfindungsgemäß eine Wegrollschutzfunktion über ein zentrales Schaltelement einstellbar, sodass keine Einzelbetätigung zum Blockieren der einzelnen Lenkrollen notwendig ist.

Vorteilhaft ergibt sich erfindungsgemäß insgesamt eine deutlich sicherere Handhabung eines Stuhls, insbesondere Hochstuhls. Beispielsweise kann der Stuhl im gebremsten Zustand auch bei Anlehnen eines Anwenders bzw. bei der Verwendung als Stehhilfe oder -stütze nicht wegrollen, da die Lenkrollen unabhängig von einer unzureichenden oder ungleichmäßigen Gewichtsbelastung über die mit der zentralen Schalteinrichtung betätigten Bremsmittel gebremst sind. Insbesondere ist somit eine Feststellbremse bereitgestellt, die dem sicheren Anlehnen/ Stehsitzen in oberster Position des Stuhls dient bzw. dies ermöglicht. Zusätzlich kann erfindungsgemäß die zumindest eine Lenkrolle auch gegen Verdrehen gesichert werden. Somit ist durch die zumindest eine gegen eine Verdrehung gesicherte Lenkrolle ein sicherer Wegrollschutz ermöglicht und das Sicherheitsgefühl einer sich am Stuhl anlehnenden Person gesteigert.

Insbesondere ist erfindungsgemäß auch eine von außen weitgehend verdeckte Integration der gewichtsunabhängig schaltbaren Wegrollschutzfunktion in ein Fußkreuz ermöglicht. Dennoch bleibt das Gewicht der Wegrollschutzmechanik gering, da auf ein zusätzliches groß dimensioniertes Bodenkontakt-Bauteil, wie beispielsweise einen Stempel oder Stopper, verzichtet werden kann. Somit ist der Stuhl vorteilhaft leicht in der Produktion und auch in der späteren Handhabung transportierbar, beispielsweise beim Verfahren am Arbeitsplatz, beim Transport zum Kunden, beim Rücktransport im Wartungsfall oder im Falle eines Umzugs.

Weiterhin ist erfindungsgemäß ein vereinfachter Schaltvorgang ermöglicht, da die Schaltvorrichtung zentral angeordnet ist. Dadurch kann ein Anwender oder ggfs. eine automatische Auslösevorrichtung durch eine einmalige Betätigung der zentralen Schaltvorrichtung die zumindest eine Lenkrolle, insbesondere eine Mehrzahl von Lenkrollen, vorzugsweise alle Lenkrollen, von dem gebremsten in den freigegebenen Zustand und von dem freigegebenen in den gebremsten Zustand schalten. Vorteilhaft wird dadurch auch keine individuelle Schaltvorrichtung für die einzelnen Lenkrollen benötigt. Dies erleichtert die Bedienung und eliminiert mögliche Fehlerquellen aufgrund von weniger beweglichen und/oder schaltbaren Teilen.

Besonders vorteilhaft sind aufgrund dessen, dass die Reibpaarung zwischen Bremsmittel und Lenkrolle stets gleich ist, erfindungsgemäß keinerlei Anforderungen an den Einsatzort des Stuhls in Bezug auf Reibungskoeffizienten oder der Oberflächenbeschaffenheit des Bodens vorhanden. Sofern die Lenkrollen selbst einen zur Haftreibung ausreichenden Bodenkontakt bereitstellen, ist die Bremswirkung von der Bodenoberfläche vorteilhaft unabhängig.

Ein Kraftfluss der Wegrollschutzmechanik zwischen Schaltvorrichtung und Lenkrolle ist in unterschiedlicher Weise realisierbar und modifizierbar. Insbesondere handelt es sich bei der Schaltvorrichtung und dem Bremsmittel um mehrere in vorbestimmter Weise kinematisch zusammenwirkende Bauteile. Bei weiteren Ausführungsformen wäre aber beispielsweise auch eine einteilige Schalt- und Bremsvorrichtung denkbar, wobei die Schaltvorrichtung in dem ersten Zustand direkt mit der zumindest einen Lenkrolle in Eingriff gebracht und in dem zweiten Zustand von der zumindest einen Lenkrolle gelöst ist.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform ist ein höhenverstellbarer Sitz vorgesehen, der zur Höhenverstellung mit dem Fußkreuz gekoppelt ist. Die Schaltvorrichtung ist dabei derart angeordnet und mit dem Bremsmittel gekoppelt, um die zumindest eine Lenkrolle abhängig von der Höhenverstellung in dem ersten Zustand über das ihr zugeordnete Bremsmittel zu bremsen und in dem zweiten Zustand die zumindest eine Lenkrolle freizugeben. Dadurch wird es ermöglicht das die Lenkrollen des Stuhls abhängig von der Höhe des Sitzes in einer vorbestimmten Weise automatisch entweder gebremst oder freigeben sind. Durch diese erfindungsgemäße Anordnung kann der Stuhl ohne ein zusätzliches Betätigungselement, wie einen Hebel oder dergleichen, ausgebildet werden welches dediziert die Schaltvorrichtung betätigt. Vielmehr dient die Höhenverstellung als Auslöser für die Zustandsveränderung. Eine, je nach Ausbildung der Schaltvorrichtung, etwaig notwendige Kraft um die Schaltvorrichtung zur Betätigung kann demnach aus der Höhenverstellung bzw. einem dazu vorgesehenen Aktuator abgeleitet werden. Zusätzlich ermöglicht die Höhenverstellung des Sitzes, dass der Stuhl an verschiedenste Höhenanforderungen, welche beispielsweise an einem Arbeitsplatz vorgesehen sein können, anpassbar ist.

Gemäß einer vorteilhaften Ausführungsform ist der Sitz zur Höhenverstellung über eine Federmechanik mit dem Fußkreuz gekoppelt. Vorzugsweise handelt es sich um eine unter Vorspannung stehende Linearmechanik, wodurch der Sitz ohne Kraftaufwand von einem Anwender in der Höhe verstellt werden kann. Insbesondere bildet die Federmechanik gleichzeitig eine Stuhlachse bzw. Drehachse des Stuhls. Auf diese Weise wird zusätzlich durch die Federmechanik eine Achse bereitgestellt, um welche sich der Sitz drehen kann. Vorzugsweise ist die Federmechanik in der Höhe einstellbar und selbsttätig nach oben rückstellbar. Auf diese Weise lässt sich im Falle einer abhängig von der Höhenverstellung schaltenden Schaltvorrichtung durch das selbsttätige Rückstellen der Federmechanik auch die zumindest eine Lenkrolle selbsttätig bremsen.

Gemäß einer vorteilhaften Ausführungsform weist die Schaltvorrichtung einen zentralen Abschnitt auf, der koaxial zur Federmechanik angeordnet ist. Zusätzlich umgibt der zentrale Abschnitt die Federmechanik umfänglich, beispielsweise hülsenartig. Insbesondere ist die Federmechanik umfänglich vollständig von dem zentralen Abschnitt umgeben. Insbesondere handelt es sich bei dem zentralen Abschnitt um einen beweglichen Teil der Schaltvorrichtung, der zum Schalten koaxial zu der Federmechanik bewegbar ist. Auf diese Weise ist eine sehr kompakte Integration der Schaltvorrichtung in den Stuhl geschaffen, da die Federmechanik innerhalb der Schaltvorrichtung verschachtelt angeordnet ist. Des Weiteren kann die Schaltvorrichtung auf einem äußeren Umfang der Federmechanik geführt sein, sodass eine Richtung von Schaltkräften vorbestimmt ist. Weiterhin ist eine Montage der Schaltvorrichtung auf der Federmechanik durch die Koaxialität der beiden Bauteile erleichtert.

Gemäß einer vorteilhaften Ausführungsform weist der Sitz einen Sitzträger mit einer Sitzverstellmechanik auf. Die Federmechanik koppelt dabei die Sitzverstellmechanik mit dem Fußkreuz. Die Sitzverstellmechanik kann mehrere Funktionen bereitstellen, wie beispielsweise eine Auslösung der Sitzhöhenverstellung, eine Sitzneigungsverstellung, und/oder eine Lordosenvestellung. Auf diese Wiese kann ein Anwender, insbesondere eine auf dem Stuhl sitzende Person, sämtliche Einstellungen am Stuhl direkt an der einfach erreichbaren Sitzverstellmechanik am Sitzträger durchführen. Insbesondere bei einem Hochstuhl ist eine Sitzneigungsverstellung beispielsweise im Bereich von +/- 3° bis +/- 6° vorgesehen. Auf diese Weise kann ein Benutzer sich die Sitzfläche angepasst für verschiedene Anwendungen und gegebenenfalls auch zum Anlehnen einstellen und es ist ein hoher Bedienkomfort bereitgestellt. Die Sitzneigungsverstellung kann auch selbstregulierend ausgebildet sein, beispielsweise gekoppelt mit der Gewichtsverlagerung einer auf dem Stuhl sitzenden Person. Der Sitzträger kann daher die Sitzverstellmechanik aufnehmen und/oder den Sitz mit der Sitzverstellmechanik verbinden. Des Weiteren kann der Sitzträger die Basis für die Montage weiterer Stuhlelemente oder Bauteile, wie beispielsweise Rückenlehne, Armlehne und/oder Kopfstütze bilden.

Gemäß einer vorteilhaften Ausführungsform weist die Federmechanik eine Gasdruckfeder auf. Insbesondere ist die Federmechanik als Gasdruckfeder ausgebildet. Die Federmechanik kann je nach Anwendung zusätzlich eine hydraulische Feder und/oder eine Schraubenfeder aufweisen. Vorteilhaft ist eine Gasdruckfeder stufenlos verstellbar und selbsttätig nach oben rückstellbar. Auf diese Weise lässt sich im Falle einer abhängig von der Höhenverstellung schaltenden Schaltvorrichtung durch das selbsttätige Rückstellen der Gasdruckfeder auch die zumindest eine Lenkrolle selbsttätig bremsen.

Gemäß einer vorteilhaften Ausführungsform ist der Abstand zwischen dem Sitz und dem Fußkreuz in dem ersten Zustand größer ist als in dem zweiten Zustand. Ist der Abstand größer als eine vorbestimmter Schalthöhe, dann befindet sich der Stuhl in dem ersten Zustand, in welchem die zumindest eine Lenkrolle gebremst ist. Ist der Abstand kleiner als die vorbestimmte Schalthöhe, befindet sich der Stuhl in dem zweiten Zustand, in welchem die zumindest eine Lenkrolle freigegeben ist. Somit ist eine Abhängigkeit des Zustands von der aktuellen Höhe des Sitzes vorgesehen. Diese funktionale Verbindung des Abstands zwischen Sitz und Fußkreuz mit dem Schalten zwischen dem ersten und zweiten Zustand kann insbesondere Einstellbar vorgesehen sein und ermöglicht so die zielgerichtete Auslegung auf verschiedene Körpergrößen und Anwendungsfälle. Auf diese Weise ist ein vielseitig einsetzbarer Stuhl bereitgestellt. Ist der Stuhl im ersten Zustand ab einer vorbestimmten Höhe gebremst, kann er als Hochstuhl einerseits oder auch als Stehhilfe, das heißt im Gegensatz zu Gewichtsgesteuerten Hochstühlen beispielsweise auch nur zum Anlehnen, verwendet werden. Alternativ dazu sind die Lenkrollen des Stuhls im zweiten Zustand freigegeben und der Stuhl kann vom Anwender auf einfache Weise verlagert werden. Des Weiteren kann der Stuhl im zweiten Zustand als bewegbarer Stuhl, beispielsweise als Bürodrehstuhl, verwendet werden.

Gemäß einer vorteilhaften Ausführungsform weist die Wegrollschutzmechanik mehrere Bremsmittel auf, die mit der Schaltvorrichtung gekoppelt sind. Dadurch können mehrere Lenkrollen über die Bremsmittel gebremst werden. Insbesondere können mittels der Schaltvorrichtung mehrere Lenkrollen gleichzeitig über die Bremsmittel gebremst werden. Gleichermaßen können die Lenkrollen auch wieder gleichzeitig freigegeben werden. Eine derartige Koppelung mehrerer Bremsmittel mit der Schaltvorrichtung schafft eine Redundanz und stellt somit einen zusätzlichen Schutz gegen Wegrollen bereit. Des Weiteren ist es bei einer vorteilhaften Ausführungsform möglich, die Anzahl der Bremsmittel auf die Anzahl der Lenkrollen abzustimmen, um die Bremswirkung zu maximieren. Auf diese Weise kann eine sehr sichere Wegrollschutzmechanik bereitgestellt werden.

Erfindungsgemäß weist die Schaltvorrichtung eine zweistufige Feder auf. Die zweistufige Feder ist bei einer Ausführungsform als Totpunktfeder ausgebildet. Alternativ oder zusätzlich kann es sich um eine Membranfeder handeln. Dadurch kann die Schaltvorrichtung gezielt zwischen zwei vorbestimmten Zuständen geschaltet werden, die sich jeweils in den beiden Stufen einstellen. Bei einer Ausführungsform kann die zweistufige Feder eine unter Vorspannung stehende gebogene und/oder gewölbte Form aufweisen, welche elastisch in die andere Richtung gebogen oder gewölbt werden kann. Hierbei kann durch eine Verformung der Oberfläche der zweistufigen Feder, optional auch aufgrund von Durchdrücken der Fläche der zweistufigen Feder, zwischen den zwei Zuständen geschaltet werden. Vorteilhaft ist somit eine einteilige Realisierung der Schaltvorrichtung ermöglicht.

Erfindungsgemäß ist die zweistufige Feder als Federkörper mit einem zentralen Abschnitt und einer Mehrzahl von sternförmig angeordneten Armen ausgebildet. Die Arme erstecken sich zu den Lenkrollen. Insbesondere erstreckt sich jeweils ein Arm zu jeweils einer Lenkrolle. Der Federkörper ist somit im Wesentlichen entlang dem Fußkreuz aufgespannt ausgebildet. Der zentrale Abschnitt kann insbesondere in einem Bereich des Zentrums des Fußkreuzes angeordnet sein und/oder das Zentrum umgeben. Selbiges gilt für die Federmechanik bzw. eine Stuhlachse, welche der zentrale Abschnitt des Federkörpers gleichermaßen umgeben kann. Dies ermöglicht eine platzsparende Verschachtelung der Komponenten. Durch die sternförmige Anordnung der Arme kann eine gleichmäßige Verteilung der Lenkrollen bereitgestellt werden und dadurch die Stabilität des Stuhls verbessert werden. Die sternförmige Anordnung der Arme der Schaltvorrichtung hat den zusätzlich Vorteil, dass beim Schaltvorgang radial zu der Stuhlachse wirkende Reaktionskräfte kompensiert werden können. Insbesondere liegt dazu ein virtueller Schnittpunkt der radialen Schaltkraftkomponenten der jeweiligen Arme im Zentrum der Schaltvorrichtung, so dass sich die horizontalen Kräfte gegenseitig aufheben. Auf diese Wiese kann der Schaltvorgang erleichtert werden, da keine horizontalen Kräfte überwunden werden müssen. Ferner entfällt die Notwendigkeit eines Lagers zur Aufnahme radialer Kräfte, sodass keine zusätzliche Führung des zentralen Abschnitts benötigt wird.

Gemäß einer vorteilhaften Ausführungsform weist das Bremsmittel eine Führung und ein Reibelement auf. Die Führung ist in oder auf dem Fußkreuz vorgesehen und das Reibelement ist in der Führung angeordnet. Die Führung kann beispielsweise als Linearführung ausgebildet sein. Das Reibelement wird in der Führung geführt und ist so auf vorbestimmte Weise zwischen den zwei Zuständen verlagerbar. Das Reibelement kann als Bremsklotz ausgebildet sein, der ein Material mit einem hohen Reibungskoeffizienten enthält um die Bremswirkung zu erhöhen. Optional kann das Reibelement derart ausgeführt sein, dass es mit der Form der Lenkrolle korrespondiert. Auf diese Weise kann eine Kontaktfläche zwischen Reibelement und Lenkrolle maximiert werden. Des Weiteren kann beispielsweise das Reibelement auch von der Schaltvorrichtung von außen, zumindest überwiegend, verdeckt werden. Diese Verdeckung kann das Reibelement einerseits vor Einwirkungen von außen und vor Verschmutzung im Betrieb schützen. Andererseits ist auf diese Weise eine vom Bauraum kompakte unter Designaspekten eine ansprechende Integration der Wegrollschutzmechanik realisiert. Insgesamt ist somit eine hohe Betriebs- und Funktionssicherheit sowie eine maximale Bauraumausnutzung bereitgestellt.

Gemäß einer vorteilhaften Ausführungsform ist ein Abstand zwischen dem Sitz und einer gemeinsamen Ebene der Lenkrollen von zwischen 0,3 m und 1 m einstellbar. Insbesondere kann der Abstand zwischen 0,4 m und 0,9 m eingestellt werden. Bevorzugt ist der Abstand zwischen 0,4 m und 0,8 m Einstellbar. Die Einstellung kann je nach Einsatzbereich stufenlos ausgebildet sein. Auf diese Weise kann ein vielfältig einsetzbarer Stuhl bereitgestellt werden.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung eines Stuhls mit Lenkrollen im gebremsten Zustand;
- Fig. 2: eine schematische Darstellung des Stuhls nach Fig. 1 mit Lenkrollen im freigegebenen Zustand;
- Fig. 3: eine schematische Darstellung eines Stuhls mit Lenkrollen im gebremsten Zustand gemäß einer weiteren Ausführungsform;
- Fig. 4: eine schematische Darstellung eines Stuhls mit Lenkrollen im freigegebenen Zustand gemäß einer weiteren Ausführungsform;
- Fig. 5: eine Seitenansicht eines Stuhls gemäß einer weiteren Ausführungsform mit einem Sitz in einer oberen Position;
- Fig. 6: eine Seitenansicht des Stuhls nach Fig. 5 mit dem Sitz in einer unteren Position;
- Fig. 7: eine isometrische Ansicht eines Fußkreuzes mit Lenkrollen und einer Wegrollschutzmechanik;
- Fig. 8: eine Explosionsdarstellung eines Abschnitts eines Fußkreuzes mit Lenkrolle und Wegrollschutzmechanik;
- Fig. 9: eine Querschnittdarstellung eines Fußkreuzes mit Lenkrollen und Wegrollschutzmechanik mit gebremsten Lenkrollen;
- Fig. 10: eine Querschnittdarstellung des Fußkreuzes mit Lenkrollen und Wegrollschutzmechanik nach Fig. 9 mit freigegebenen Lenkrollen;
- Fig. 11: eine perspektivische Unteransicht in Explosionsdarstellung eines Abschnittes eines Fußkreuzes mit Lenkrolle und Wegrollschutzmechanik gemäß eines Beispiels, welches nicht Teil der Erfindung ist;
- Fig. 12: eine Querschnittdarstellung der Wegrollschutzmechanik mit Fußkreuz und Lenkrollen nach Fig. 11 mit gebremsten Lenkrollen; und
- Fig. 13: eine Querschnittdarstellung der Wegrollschutzmechanik nach Fig. 11 und 12 mit freigegebenen Lenkrollen.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

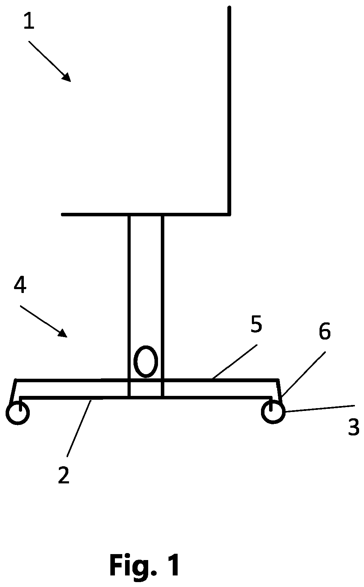

Fig. 1 zeigt eine schematische Darstellung eines Stuhls 1 mit Lenkrollen 3 im gebremsten Zustand.

Der Stuhl 1 weist ein Fußkreuz 2, mehrere Lenkrollen 3, sowie eine Wegrollschutzmechanik 4 auf. Die Wegrollschutzmechanik 4 umfasst eine Schaltvorrichtung 5 und mehrere Bremsmittel 6 zum Bremsen der Lenkrollen 3.

Das Fußkreuz 2 ist zur Gewichtsabstützung und zur drehbaren Lagerung der Lenkrollen 3 ausgebildet. Die Schaltvorrichtung 5 ist zur Lagerung und/oder Betätigung der Bremsmittel 6 ausgebildet. Alternativ oder zusätzlich kann auch das Fußkreuz 2 zur Lagerung der Bremsmittel 6 ausgebildet sein. Ferner ist die Schaltvorrichtung 5 zum Schalten zwischen zwei Zuständen ausgebildet.

Die hier dargestellte Ausführung mit einer schematisierten Betätigung über einen nockenartigen Auslöser und dadurch betätigter Höhenverstellung der Bremsmittel ist rein illustrativ und nicht limitierend zu verstehen. Es sind vielfältige andere konstruktive Ausführungen und gewichtsunabhängige Betätigungsprinzipien der Schaltvorrichtung 5 denkbar. Insbesondere sind auch von Verstell-Parametern des Stuhls 1 abhängige selbsttätige Betätigungslösungen möglich.

Die Schaltvorrichtung 5 ist zentral, das heißt mittig im Bereich einer Stuhlachse, angeordnet. Bei der dargestellten Ausführungsform ist die Schaltvorrichtung 5 rein beispielhaft vertikal versetzt zum Fußkreuz 2 angeordnet. Alternativ oder zusätzlich wäre auch eine ggfs. teilweise Integration der Schaltvorrichtung 5 in das Fußkreuz 2 denkbar.

Die Bremsmittel 6 sind derart durch die Schaltvorrichtung 5 schwenkbar und/oder verschiebbar angeordnet, dass sie mit den Lenkrollen 3 in Eingriff gebracht werden können, um ein Wegrollen des Stuhls 1 zu verhindern. In Fig. 1 befindet sich die Schaltvorrichtung 5 in einem ersten Zustand, welcher durch einen bremsenden Eingriff der Bremsmittel 6 mit den Lenkrollen 3 gekennzeichnet ist. Mit den gebremsten Lenkrollen 3 ist der Stuhl 1 somit gegen Wegrollen gesichert.

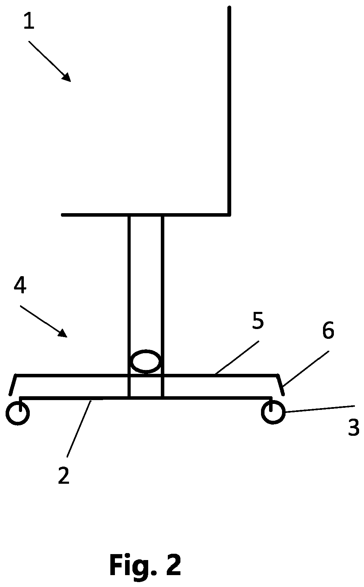

Fig. 2 zeigt eine schematische Darstellung des Stuhls 1 nach Fig. 1 mit Lenkrollen 3 im freigegebenen Zustand.

Die Schaltvorrichtung 5 ist nun in einem zweiten Zustand, welcher durch die Freigabe der Lenkrollen 3 gekennzeichnet ist. Die Bremsmittel 6 sind nicht in Eingriff mit den Lenkrollen 3. Die Lenkrollen 3 sind dementsprechend freigegeben und der Stuhl 1 ist somit bewegbar bzw. rollbar.

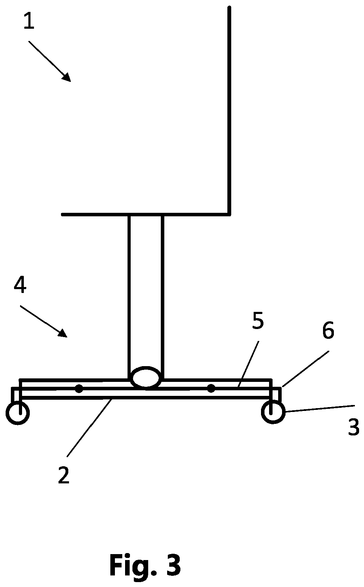

Fig. 3 zeigt eine schematische Darstellung eines Stuhls 1 mit Lenkrollen 3 im gebremsten Zustand gemäß einer weiteren Ausführungsform.

Im Unterschied zu Fig. 1 und Fig. 2 ist hier das Fußkreuz 2 zur Aufnahme der Schaltvorrichtung 5 ausgebildet. Die dargestellte schematisierte Schaltvorrichtung 5 umfasst mindestens zwei Arme, beispielsweise als Hebel ausgeführt, welche drehbar innerhalb des Fußkreuzes 2 gelagert sind. In Fig. 3 befindet sich die Schaltvorrichtung 5 in einem ersten Zustand, welcher durch einen bremsenden Eingriff der Bremsmittel 6 mit den Lenkrollen 3 gekennzeichnet ist. Mit den gebremsten Lenkrollen 3 ist der Stuhl 1 somit gegen Wegrollen gesichert. Der dargestellte mittige Auslöser ist, wie bereits erwähnt, rein illustrativ und nicht als limitierend zu verstehen.

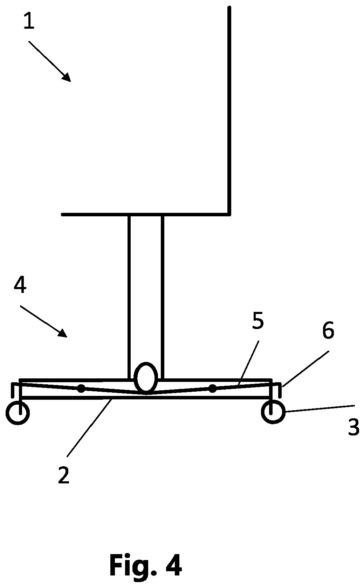

Fig. 4 zeigt eine schematische Darstellung eines Stuhls 1 mit Lenkrollen 3 gemäß Fig. 3 im freigegebenen Zustand.

Die Schaltvorrichtung 5 ist nun in einem zweiten Zustand, welcher durch die Freigabe der Lenkrollen 3 gekennzeichnet ist. Die Bremsmittel 6 sind dementsprechend nicht in Eingriff mit den Lenkrollen 3. Die Arme der Schaltvorrichtung 5 werden durch eine Betätigung durch den Auslöser um die jeweiligen Lager in dem Fußkreuz gedreht, um die Bremsmittel 6 und die Lenkrollen 3 zu trennen. Die Lenkrollen 3 sind dementsprechend freigegeben und der Stuhl 1 ist somit bewegbar bzw. rollbar.

Es versteht sich, dass der dargestellte Stuhl 1 in Fig. 1, Fig. 2, Fig. 3 und Fig. 4 rein schematisch, das heißt zur Illustration stark vereinfacht und nicht maßstäblich dargestellt ist.

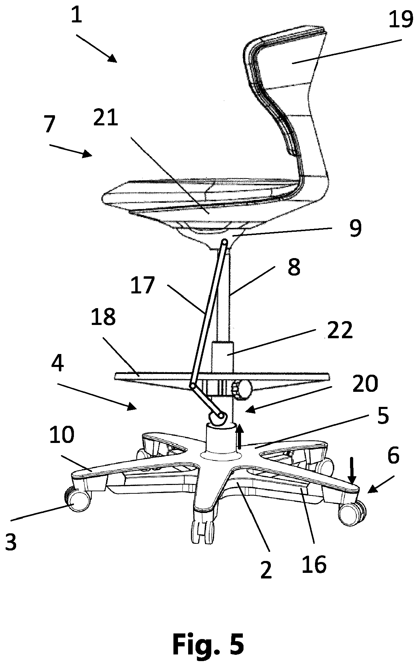

Fig. 5 zeigt eine Seitenansicht eines Stuhls 1 gemäß einer weiteren Ausführungsform.

Bei der dargestellten Ausführungsform ist der Sitz 7 zur Höhenverstellung mit dem Fußkreuz 2 gekoppelt und befindet sich gemäß Fig. 5 in einer oberen Position. Somit kann der Stuhl 1 als Hochstuhl, das heißt zum erhöhten Sitzen oder als Stehhilfe, verwendet werden.

Der Stuhl 1 weist neben dem Sitz 7 eine Federmechanik 8, einen abhängig von der Verstellhöhe des Sitzes des Stuhls optionalen Fußring 18, ein Fußkreuz 2 mit mehreren sternförmig angeordneten Armen 16, mehrere Lenkrollen 3, einen Hebel 17, sowie eine Wegrollschutzmechanik 4 auf.

Die Wegrollschutzmechanik 4 weist eine Schaltvorrichtung 5 mit mehreren sternförmig angeordneten Armen 10 und mehrere Bremsmittel 6 im Bereich der Lenkrollen 3 auf. Die Schaltvorrichtung ist mit den Bremsmitteln 6 gekoppelt, um die Lenkrollen 3 abhängig von der Höhenverstellung des Sitzes 7 in dem ersten Zustand über die Bremsmittel 6 zu bremsen und in dem zweiten Zustand freizugeben.

Der Sitz 7 weist eine Sitzlehne 19, einen Sitzträger 21 und eine Sitzverstellmechanik 9 auf. Der funktionale Zusammenhang zwischen Schaltvorrichtung 5, Bremsmittel 6 und Lenkrolle 3 unterscheidet sich von der Ausführungsform nach Fig. 1 und Fig. 2 dadurch, dass eine Entlastung der Schaltvorrichtung 5 hier zu einer Aktivierung der Bremsmittel 6 führt, wie in Fig. 1 mit den fett eingezeichneten Kraftpfeilen illustriert.

Als weiterer Unterschied ist die Schaltvorrichtung 5 hier kinematisch mit der Höhenverstellung des Sitzes 7 gekoppelt. Dazu betätigt hier beispielhaft ein mit der Sitzverstellmechanik 9 gekoppelter Hebel 17 über einen Auslöser 20 die Schaltvorrichtung 5, um damit die Schaltvorrichtung 5 zwischen dem hier dargestellten ersten Zustand mit gebremsten Lenkrollen 3 und einem zweiten Zustand mit freigegebenen Lenkrollen 3 zu schalten.

In dem dargestellten ersten Zustand ist der Stuhl 1 durch die gebremsten Rollen an seinem Platz auf einem Untergrund bzw. Boden fixiert und nicht, zumindest nicht ohne eine Überwindung der Haftreibung der Lenkrollen 3, verschiebbar.

Bei weiteren Ausführungsformen wäre alternativ oder zusätzlich auch eine Handbetätigung der Schaltvorrichtung 5 denkbar. Beispielsweise kann dazu der Hebel 17 derart länglich ausgebildet und angeordnet sein, dass ein Anwender, der sich auf dem Sitz 7 befindet, den Hebel 17 händisch erreichen und betätigen kann, um den Auslöser 20 zu betätigen. Bei noch weiteren Ausführungsformen wäre auch eine gewichtsunabhängige Fußbetätigung denkbar, beispielsweise über einen fußbetätigten Kippschalter, oder dergleichen.

Bei weiteren Ausführungsformen wären ferner andersartige kinematische Kopplungen zwischen der Höhenverstellung des Stuhls 1 und der Schaltvorrichtung 5 denkbar.

Der Auslöser 20 ist hier beispielhaft derart exzentrisch ausgebildet, dass durch eine Rotation des Auslösers 20 die Schaltvorrichtung 5 betätigt wird, wobei die Schaltvorrichtung 5 im ersten Zustand in Richtung Sitz 7 freigegeben oder im zweiten Zustand in Richtung Fußkreuz 2 gedrückt wird und so je nach Rotationsrichtung zwischen dem ersten und zweiten Zustand geschalten wird. Bei weiteren Ausführungsformen wären selbstverständlich andere Arten von Auslösern, insbesondere auch translatorisch bzw. linear betätigbare Auslöser, aktuatorisch betätigbare Auslöser, oder dergleichen möglich.

Wie in Fig. 5 gezeigt, ist die Federmechanik 8 mit der Unterseite der Sitzverstellmechanik 9 gekoppelt. Des Weiteren ist ein Standfuß 22 der Federmechanik 8 mit zentral auf dem Fußkreuz 2 angebracht. Die Federmechanik 8 und der Standfuß 22 sind hier beispielhaft konzentrisch und koaxial zueinander aufgebaut und die Federmechanik 8 ist wie abgebildet innerhalb vom Standfuß 22 aufgenommen.

Der Standfuß 22 weist einen optionalen Fußring 18 auf. Der Fußring 18 ist derart ringförmig ausgebildet und angeordnet, dass ein Anwender, der sich auf dem Sitz 7 befindet, seine Füße auf dem Fußring 18 abstellen kann.

Der Standfuß 22 bildet hier beispielhaft eine Basis für den Auslöser 20. Bei weiteren Ausführungsformen wären selbstverständlich andere Lagerstellen als Basis für einen Auslöser denkbar.

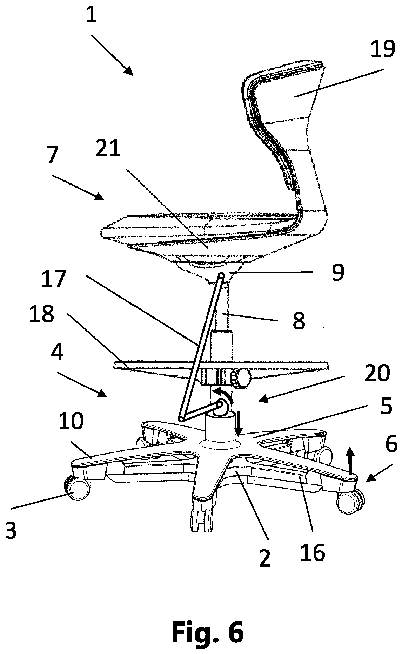

Fig. 6 zeigt eine Seitenansicht des Stuhls 1 nach Fig. 5 mit dem Sitz 7 in einer unteren Position.

Durch die Höhenverstellung des Sitzes nach unten betätigt der Hebel 17 über den Auslöser 20, hier beispielhaft durch eine Rotation eines nockenartig geformten Auslösers 20 die Schaltvorrichtung 5. Bei der dargestellten Ausführungsform wird dadurch ein zentraler Abschnitt der Schaltvorrichtung 5 nach unten gedrückt, was die Schaltvorrichtung im Bereich der Bremsmittel 6 entlastet, wie mit den eingezeichneten dicken Kraftpfeilen schematisch symbolisiert. Somit geben die Bremsmittel 6 die Lenkrollen 3 frei. Auf diese Weise schaltet die Schaltvorrichtung 5 in den zweiten Zustand mit freigegebenen Lenkrollen 3, sodass der Stuhl 1 nun frei bewegbar bzw. rollbar ist.

Die Schaltvorrichtung 5 weist einen zentralen, zu der Federmechanik 8 koaxialen, Abschnitt auf. Der koaxiale Abschnitt umgibt die Federmechanik 8 umfänglich, beispielsweise vollständig.

Der Abstand zwischen dem Sitz 7 und einer gemeinsamen Ebene der Lenkrollen 3 ist, insbesondere stufenlos, in einem Bereich zwischen etwa 0,3 m und 1 m, insbesondere zwischen 0,4 m und 0,9 m, bevorzugt zwischen 0,4 und 0,8 m, einstellbar. Auf diese Weise ist es möglich den Stuhl vielseitig einzusetzen.

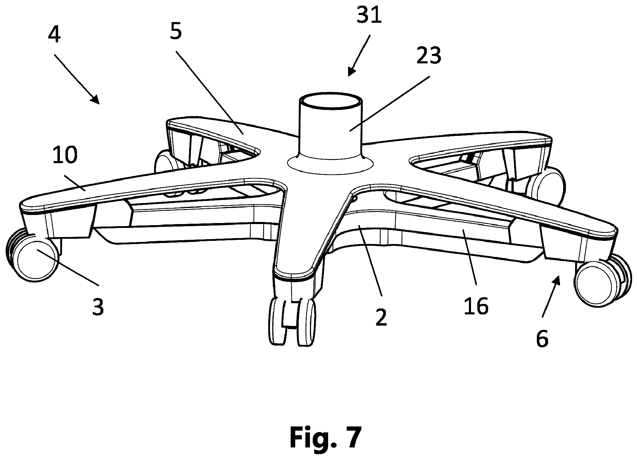

Fig. 7 zeigt eine isometrische Ansicht eines Fußkreuzes 2 mit Lenkrollen 3 und einer Wegrollschutzmechanik 4.

Die Schaltvorrichtung 5 ist vertikal nach oben versetzt auf dem Fußkreuz 2 gelagert und erstreckt sich im Wesentlichen parallel dazu. Die Lenkrollen 3 sind außen an den rein beispielhaft fünf sternförmig angeordneten Armen 16 des Fußkreuzes 2 drehbar gelagert. Die Lenkrollen 3 sind jeweils um eine vertikale Achse drehbar, sodass der Stuhl 1 in dem zweiten Zustand in jegliche Verschiebungsrichtungen bewegt bzw. gerollt werden kann. Die Schaltvorrichtung 5 weist einen zentralen Abschnitt 23 und hier rein beispielhaft fünf sternförmig angeordnete Arme 10 auf, deren freie Enden sich ebenfalls zu den Lenkrollen 3 erstrecken. Selbstverständlich wären angepasst an die Anzahl der Arme 16 des Fußkreuzes 2 auch andere Anzahlen der sternförmig angeordnete Arme 10 der Schaltvorrichtung 5 denkbar.

Bei der dargestellten Ausführungsform sind die Bremsmittel 6 außen bzw. seitlich an den Armen 16 des Fußkreuzes 2 geführt gelagert. Die Bremsmittel 6 sind derart verschiebbar ausgebildet, dass sie durch die Schaltvorrichtung 5, konkret durch eine mit den Armen 10 auf sie ausgeübten Kraft, mit den Lenkrollen 3 in reibschlüssigen Eingriff gebracht werden können und so die Lenkrollen 3 gebremst werden.

Der zentral angeordnete Abschnitt 23 der Schaltvorrichtung 5 ist hülsenartig bzw. hohlzylindrisch ausgebildet. Er weist eine Öffnung 31 auf und bildet so eine Verbindungsmöglichkeit zum Fußkreuz 2 durch die Schaltvorrichtung 5 hindurch. Die Arme 10 und Arme 16 sind zueinander im Wesentlichen gleichläufig ausgebildet und angeordnet, wobei die Arme 10 der Schaltvorrichtung 5 das Fußkreuz 2 im Wesentlichen von oben abdecken. Die freien Enden der Arme 10 verlaufen dabei von dem zentralen Abschnitts 23 bis zu dem Lenkrollen 3.

Die Arme 10 der Schaltvorrichtung 5 besitzen hier beispielhaft eine sich von dem zentralen Abschnitt 23 zu den freien Enden verjüngende Form. Zusätzlich verdecken die Arme 10 die darunterliegenden Komponenten der Wegrollschutzmechanik 4 und bilden demnach eine Abdeckung mit zusätzlicher Schutzfunktion. Die freien Enden der Arme 10 sind in ihrer Form abgerundet ausgebildet und korrespondieren mit der Form der vom zentralen Abschnitt 23 abgewendeten Seite der Bremsmittel 6. Zusätzlich weisen die Arme 10 der Schaltvorrichtung 5 eine elastische Ausbildung mit geringer Dicke auf. Auf diese Weise wird eine elastisch verformbare Schaltvorrichtung 5 bereitgestellt.

Das Fußkreuz 2 ist in diesem Ausführungsbeispiel sternförmiger Körper mit vergleichsweise großen Wandstärken ausgebildet, um die notwendige Stabilität in Anbetracht des Gesamtgewichts des Stuhls und einer darauf sitzenden Person bereitzustellen. Bei weiteren Ausführungsformen kann die Dimensionierung des Fußkreuzes 2 selbstverständlich an die Stabilitätsanforderungen angepasst werden.

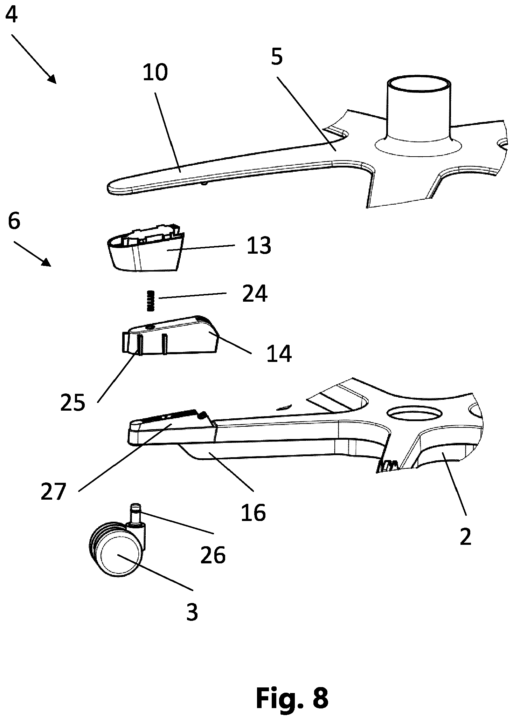

Fig. 8 zeigt eine isometrische Explosionsdarstellung eines Abschnitts eines Fußkreuzes 2 mit Lenkrolle 3 und einer Wegrollschutzmechanik 4.

In dieser Ausführungsform weist das Bremsmittel 6 ein Reibelement 13, eine Führung 14 und eine Feder 24 auf. Das Reibelement 13 ist über die Führung 14 vertikal verschiebbar angeordnet und ist durch die Feder 24 selbsttätig rückstellbar. Die Führung 14 weist mehrere Führungsrippen 25 auf, welche das Reibelement 13 linear führen. Die Führungsrippen 25 sind am horizontalen Umfang der Führung 14 derart angeordnet, dass das Reibelement 13 verklemmungsfrei geführt ist und in einem nach unten verschobenen Zustand die Lenkrolle 3 reibschlüssig kontaktiert bzw. bremst.

Die Feder 24 ist in der dargestellten Ausführungsform rein beispielhaft als Schraubenfeder ausgeführt und sitzt innerhalb der Führung 14. Zum Aufbringen einer Vorspannung stützt sich die Feder 24 im montierten Zustand mit einem Ende an der Führung 14 und mit dem anderen Ende an dem Reibelement 13 ab. Auf diese Weise übt die Feder 24 eine Vorspannung auf das Reibelement 13 aus. Diese Vorspannung bewirkt einerseits, dass das Reibelement 13 nur bei einer vorbestimmten Belastung durch die Schaltvorrichtung 5 mit der Lenkrolle 3 in Eingriff gebracht wird. Andererseits ermöglich die Vorspannung die selbsttätige Rückstellung des Reibelements 13 bei Entlastung durch die Schaltvorrichtung 5.

Die Führung 14 ist mit einer Bremsmittelaufnahme 27 des Arms 16 des Fußkreuzes 2 gekoppelt. Die Bremsmittelaufnahme 27 ist am freien Ende des Arms 16 fixiert. Die Führung 14 ist beispielsweise formschlüssig mit der Bremsmittelaufnahme 27 gekoppelt. Bei weiteren Ausführungsformen sind verschiedene andere Befestigungsmechanismen ebenfalls denkbar, wie beispielsweise mittels dedizierter Befestigungsmittel, Stoffschluss, oder dergleichen. Bei weiteren Ausführungsformen ist auch eine einteilige Ausführung der Bremsmittelaufnahme 27 und Führung 14 denkbar.

Die Lenkrolle 3 weist einen Bolzen mit Klemmring 26 auf, welcher zur Kraftschlüssigen Befestigung in einer im freien Ende des Arms 16 des Fußkreuzes 2 vorgesehenen Ausnehmung ausgebildet ist. Der Bolzen mit Klemmring 26 ist rotationssymmetrisch ausgebildet und erlaubt so ein Drehen der Lenkrolle 3 um die, insbesondere vertikale, Bolzenachse, um Richtungsänderungen des Stuhls 1 durch Rotation der Lenkrolle 3 zu ermöglichen.

Im ersten Zustand der Schaltvorrichtung 5 betätigt der Arm 10 das Reibelement 13 durch eine Kraftaufbringung nach unten. Das Reibelement 13 wird dabei von den Führungsrippen 25 der Führung 14 zu einer Lenkrolle 3 geführt. Auf diese Weise wird die Lenkrolle 3 durch die Schaltvorrichtung 5 gebremst. Im zweiten Zustand der Schaltvorrichtung 5 wird das Reibelement 13 von dem Arm 10 der Schaltvorrichtung 5 nicht mit einer Kraft beaufschlagt. Aufgrund der Vorspannung der Feder 24 wird das Reibelement 13 selbsttätig zurückgestellt. Auf diese Weise besteht demnach kein Eingriff zwischen Reibelement 13 und der Lenkrolle 3 und die Lenkrolle 3 ist dementsprechend freigegeben.

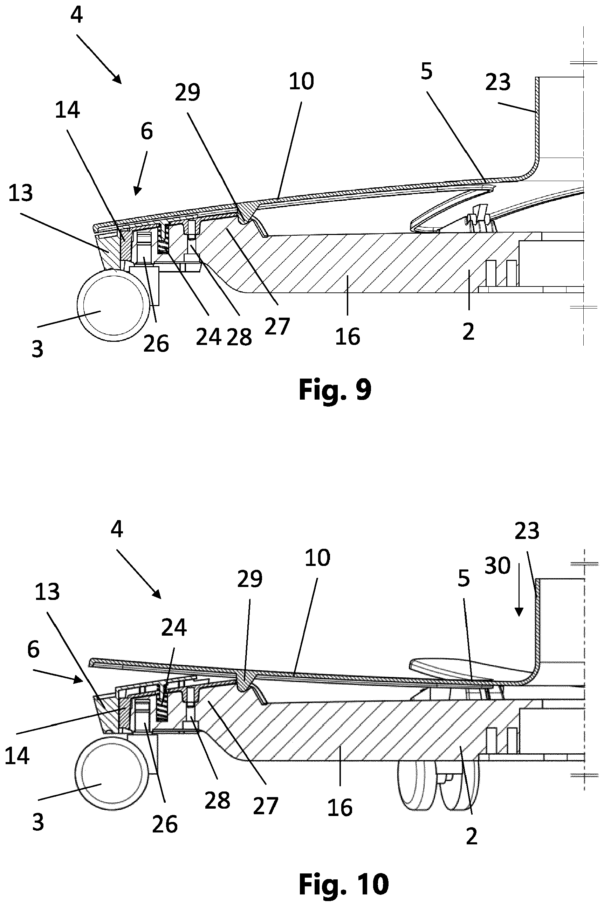

Fig. 9 zeigt eine Querschnittdarstellung eines Fußkreuzes 2 mit Lenkrollen 3 und Wegrollschutzmechanik 4 mit gebremsten Lenkrollen 3.

Die Schaltvorrichtung 5 befindet sich hier im ersten Zustand, sodass das Reibelement 13 im Reibschluss mit der Lenkrolle 3 steht.

Die Schaltvorrichtung 5 ist in der dargestellten Ausführungsform als zweistufige Schaltfeder, insbesondere Membranfeder, ausgebildet. Sie ist dazu an dem Arm 10 über ein Lager 29 im Fußkreuz 2 drehbar abgestützt. Beispielhaft ist das Lager 29 hier verschachtelt mit der Führung 14 an der Bremsmittelaufnahme 27 vorgesehen. Der Arm 10 der Schaltvorrichtung 5 weist in dem dargestellten ersten Zustand eine konvexe Form auf und drückt an seinem freien Ende das Reibelement 13 nach unten.

Die Führung 14 ist in dieser Ausführungsform über eine Befestigung 28 mit der Bremsmittelaufnahme 27 des Fußkreuzes 2 verbunden. Die Befestigung 28 ist beispielhaft als Nietverbindung ausgeführt.

Bei der dargestellten Ausführungsform ist eine Kontaktfläche des Reibelements 13 gerade ausgeführt. Gemäß einer weiteren Ausführungsform kann die Oberflächenform des Reibelements 13, dass mit der Lenkrolle 3 in Eingriff gebracht wird, mit der Lenkrolle 3 korrespondieren. Auf diese Weise wird die Kontaktoberfläche des Reibelements 13 die mit der Lenkrolle 3 in Eingriff gebracht wird und die Bremswirkung bei gleicher Dimensionierung des Reibelements 13 erhöht.

Fig. 10 zeigt eine Querschnittdarstellung des Fußkreuzes 2 mit Lenkrollen 3 und Wegrollschutzmechanik 4 nach Fig. 9 mit freigegebenen Lenkrollen 3.

Die Schaltvorrichtung 5 befindet sich hier im zweiten Zustand mit freigebenden Lenkrollen 3. Das Reibelement 13 ist demnach nicht in Kontakt mit der Lenkrolle 3. In dem dargestellten Zustand wird der zentrale Abschnitt 23 der Schaltvorrichtung 5 nach unten in die vorbestimmte Richtung 30 gedrückt. Der Arm 10 der Schaltvorrichtung 5 verformt sich demnach und rotiert um das Lager 29. Der Arm 10 der Schaltvorrichtung 5 weist im zweiten Zustand somit eine konkave Form auf. Auf diese Weise entsteht ein Abstand zwischen dem freien Ende des Arms 10 der Schaltvorrichtung 5 und dem Reibelement 13. Ferner wird durch die Vorspannung der Feder 24 das Reibelement 13 entgegen der vorbestimmten Richtung 30 nach oben gedrückt. Auf diese Weise besteht keine Verbindung und Bremswirkung zwischen dem Reibelement 13 und der Lenkrolle 3. Die konkave Verformung des Arms 10 bewirkt daher eine Freigabe der Lenkrolle 3.

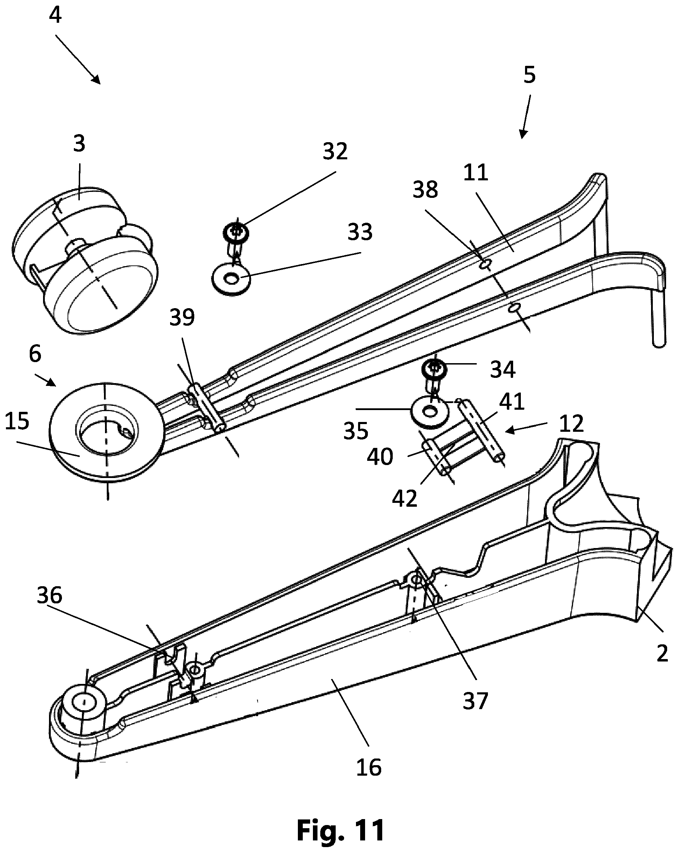

Fig. 11 zeigt eine isometrische Untersicht in Explosionsdarstellung eines Abschnittes eines Fußkreuzes 2 mit Lenkrolle 3 und Wegrollschutzmechanik 4 gemäß eines Beispiels, welches nicht Teil der Erfindung ist.

Es handelt sich um eine beispielhafte konkrete Ausführung des in Bezug auf den Stuhl der Fig. 3 und 4 erläuterten Prinzips.

Gemäß dieses Beispiels weist die Schaltvorrichtung 5 einen anderen Aufbau mit einem starren Hebel 11 und einem elastischen Totpunktlenker 12 auf. Der Hebel 11 ist drehbar über ein Lager 36 mit einer Achse 39 im Arm 16 des Fußkreuzes 2 gelagert. Zur Befestigung sind Befestigungsmittel 32 und Scheibe 33 vorgesehen. Das freie Ende des Hebels 11 nimmt hier das Bremsmittel 6 direkt auf, welches eine Reibfläche 15 zur Kontaktierung der Lenkrolle 3 aufweist. Durch Kippen des Hebels 11 um die Achse 39 des Lagers 36 kann die Reibfläche 15 in Reibkontakt mit der Lenkrolle 3 gebracht werden. Auf diese Weise wird eine Bremswirkung auf die Lenkrolle 3 ausgeübt.

Die Schaltvorrichtung 5 weist somit, bei Betrachtung eines vollständigen Fußkreuzes 2, eine Mehrzahl der sternförmig um einen zentralen Abschnitt angeordneten Hebeln 11 auf. Die Hebel 11 erstrecken sich, insbesondere jeweils, ausgehend von dem zentralen Abschnitt zu den Lenkrollen 3. Diese Anordnung der Hebel 11 kann beliebig gewählt werden und beispielsweise auch als einteiligen Verbindung mehrere Hebel 11 ausgeführt sein.

Der Totpunktlenker 12 bildet eine weitere Verbindung zwischen Hebel 11 und Arm 16 des Fußkreuzes 2. Der Totpunktlenker 12 ist elastisch ausgeführt und weist zwei Drehpunkte auf, die mit Achsen 40 und 41 gebildet sind und welche über ein flach ausgebildetes Mittelstück 42 miteinander verbunden sind. Die Achse 40 des Totpunktlenkers 12 ist im Hebel 11 über das Lager 37 verankert und die Achse 41 des Totpunktlenkers 12 ist im Arm 16 des Fußkreuzes 2 über das Lager 38 angelenkt. Zur Befestigung sind Befestigungsmittel 34 und Scheiben 35 vorgesehen. Die Achse 41 ist im Lager 38, welches als Durchgangsloch ausgebildet ist, drehbar angelenkt. Aufgrund der entstehenden Kinematik aus der Lagerung des Hebels 11 im Lager 36 und der Lagerung des Totpunktlenkers 12 in Lager 37 und 38 kann der Totpunktlenker 12 und auch die Schaltvorrichtung 5 zwischen zwei Zuständen geschaltet werden. In einer Mittellage ist der Totpunktlenker 12 elastisch gespannt, sodass er je nach Stellung selbsttätig in einen der beiden Zustände wechselt. Die beiden Zustände werden somit durch einen Totpunkt getrennt ab welchem der Totpunktlenker 12 automatisch in den jeweils anderen Zustand wechselt. Dieser Totpunkt liegt insbesondere auf einer gemeinsamen Linie durch die der Lager 36, 37.

Das Bremsmittel 6 mit Reibfläche 15 ist derart flächig ausgebildet und angeordnet, dass es durch kippen des Hebels 11 mit der Lenkrolle 3 in Eingriff gebracht werden kann. Bei der dargestellten Ausführungsform ist die Reibfläche 15 flächig als Kreisring ausgebildet. Auf diese Weise ist es möglich, durch die Reibfläche 15 hindurch, die Lenkrolle 3 am freien Ende des Arms 16 des Fußkreuzes 2 zu befestigen. Diese Befestigung ist über einen Bolzen mit Klemmring 26 bereitgestellt, und ist beispielsweise auch als Zapfen, Gewindestift oder Expander realisierbar. Somit kann die Lenkrolle 3 in jeder Stellung gleichermaßen mit der Reibfläche 15 kontaktiert und gebremst werden.

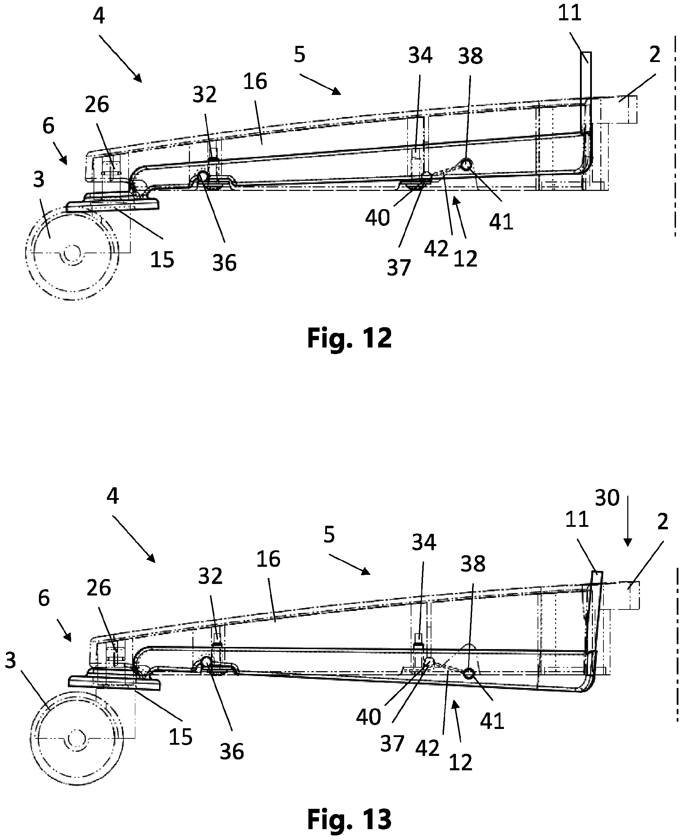

Fig. 12 zeigt eine Querschnittdarstellung des Fußkreuzes 2 mit Lenkrolle 3 und Wegrollschutzmechanik 4 nach Fig. 11 mit gebremster Lenkrolle 3.

Die Schaltvorrichtung 5 befindet sich hier im ersten Zustand mit gebremster Lenkrollen 3. Die Reibfläche 15 wird demnach mittels des Hebels 11 in Reibschluss mit der Lenkrolle 3 gebracht. Der Stuhl 1 ist dadurch an seiner Position gegen Wegrollengeschützt. Der Hebel 11 ist innerhalb eines Arms 16 des Fußkreuzes 2 aufgenommen und dementsprechend nicht von außen einsehbar. Dies kann gleichermaßen an mehreren Armen 16 oder an jedem Arm 16 des Fußkreuzes 2 vorgesehen sein.

Die Achse 41 des Totpunktlenkers 12 befindet sich innerhalb einer Aussparung/Aufnahme des Arms 16 des Fußkreuzes 2 ist in einem oberen Anschlag. Dies entspricht dem ersten Zustand des Totpunktlenkers 12 und der Schaltvorrichtung 5.

Aufgrund der Kinematik muss eine Kraft aufgebracht werden um den Totpunktlenker 12 elastisch zu verformen und über den Totpunkt hinweg zu schalten. Diese notwendige Kraft ist mittels der Positionierung der Lager 36, 37 und 38 und der Materialeigenschaften des Totpunktlenkers 12 einstellbar. In dem dargestellten ersten Zustand liegt der Totpunkt unterhalb der Achse 41 auf einer Geraden durch die Lager 37 und 38.

Mit der als Kreisring ausgebildeten Reibfläche 15 ist die Bremswirkung im ersten Zustand unabhängig von der Ausrichtung der Lenkrolle 3 stets vorhanden, beispielsweise auch wenn die Lenkrolle 3 sich um 180° dreht und somit sich unterhalb des Arms 16 des Fußkreuzes 2 befindet. Auf diese Weise ist es bei jeglicher Winkelstellung der Lenkrolle 3 möglich, die Lenkrolle 3 mit dem Bremsmittel 6 und der Reibfläche 15 in Eingriff zu bringen. Zusätzlich ist die Lenkrolle mittels der Reibfläche auch gegen Verdrehen gesichert.

Fig. 13 zeigt eine Querschnittdarstellung der Wegrollschutzmechanik 4 mit Fußkreuz 2 und Lenkrollen 3 nach Fig. 11 und 12 mit freigegebenen Lenkrollen 3.

In dem dargestellten zweiten Zustand ist der Hebel 11 in einem zentralen Abschnitt der Schaltvorrichtung 5 in der vorbestimmten Richtung 30 nach unten gedrückt und der Totpunktlenker 12 wurde über den Totpunkt bewegt. Der Hebel 11 ist somit um das Lager 36 gekippt, wobei das Bremsmittel 6 angehoben wird. Das Bremsmittel 6 mit Reibfläche 15 steht demnach nicht in Kontakt mit der Lenkrolle 3. Die Lenkrolle 3 ist dadurch von der Wegrollschutzmechanik 4 freigegeben und der Stuhl 1 kann frei bewegt werden.

Im Unterschied zu Fig. 12 liegt die Achse 41 des Totpunktlenkers 12 nun unter dem Totpunkt. Der durch die Achse 41 gebildete Drehpunkt befindet sich in seiner untersten Position. Der Totpunktlenker 12 wird ab dieser untersten Position auf Zug belastet und hält so den Hebel 11 fest. Diese unterste Position entspricht dem zweiten Zustand des Totpunktlenkers 12 und der Schaltvorrichtung 5. Zum Schalten des Totpunktlenkers 12 und der Schaltvorrichtung 5 zurück in den ersten Zustand, muss daher wieder eine Kraft entgegen der vorbestimmten Richtung 30 aufgebracht werden, um den Totpunkt nochmals in der entgegen gesetzten Richtung zu überwinden.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Beispielsweise sind als Befestigungsmittel selbstverständlich stets verschiedenste Arten von Befestigungsmitteln einsetzbar, wie beispielsweise Schrauben, Nieten, und/oder andere Befestigungsmittel.

Ferner kann bei verschiedenen Ausführungsformen insbesondere die Form der der Schaltvorrichtung 5 von den dargestellten Formen abweichen. Beispielsweise kann die zweistufige Feder auch eine umlaufende Form aufweisen. Ferner sind verschiedenste Ausbildungen der Bremsmittel 6 denkbar. Beispielsweise können anstatt der abgebildeten Bremsklotzartigen Bremsmittel 6 auch filigranere, verschachtelte und somit von dem Anwender nicht einsehbare und/oder einteilige Ausführungen vorgesehen sein.

Alternativ zu der Ausführungsform nach Fig. 9 und 10 können das Reibelement 13 und der Arm 10 der Schaltvorrichtung 5 auch einteilig ausgebildet sein. Folglich werden dadurch die Führung 14 mit Befestigung 28 und die Feder 24 nicht benötigt und auf diese Weise wird das Gewicht und die Anzahl der Bauteile verringert.

Alternativ zu dem Beispiel nach Fig. 11 kann das Bremsmittel 6 mit der Reibfläche 15 und dem Hebel 11 einteilig ausgeführt sein. Auf diese Weise kann die Teileanzahl verringert werden und dadurch die Montage erleichtert und die Komplexität gesenkt werden.

Weiterhin kann der Hebel 11 außerhalb des Fußkreuzes 2 angebracht werden.

Gemäß einer für alle Ausführungsbeispiele anwendbaren Ausführungsform kann die Schaltvorrichtung 5 durch einen geeigneten Anschlag auf der zur Schaltvorrichtung 5 hingewandten Seite des Fußkreuzes 2 vor einem Durchdrücken und einer etwaigen Beschädigung geschützt werden.

### Bezugszeichenliste

- 1: Stuhl
- 2: Fußkreuz
- 3: Lenkrolle
- 4: Wegrollschutzmechanik
- 5: Schaltvorrichtung
- 6: Bremsmittel
- 7: Sitz
- 8: Federmechanik
- 9: Sitzverstellmechanik
- 10: Arme
- 11: Hebel
- 12: Totpunktlenker
- 13: Reibelement
- 14: Führung
- 15: Reibfläche
- 16: Arme
- 17: Hebel
- 18: Fußring
- 19: Sitzlehne
- 20: Auslöser
- 21: Sitzträger
- 22: Standfuß
- 23: Abschnitt
- 24: Feder
- 25: Führungsrippen
- 26: Bolzen mit Klemmring
- 27: Bremsmittelaufnahme
- 28: Befestigung
- 29: Lager
- 30: Vorbestimmte Richtung
- 31: Öffnung
- 32: Befestigungsmittel
- 33: Scheibe
- 34: Befestigungsmittel
- 35: Scheibe
- 36, 37, 38: Lager
- 39, 40, 41: Achse

## Patentansprüche

1. Stuhl (1), insbesondere Hochstuhl,
mit einem Fußkreuz (2), an welchem mehrere Lenkrollen (3) angebracht sind,
mit einer Wegrollschutzmechanik (4), die eine zentrale Schaltvorrichtung (5) sowie zumindest ein Bremsmittel (6) aufweist, wobei das zumindest eine Bremsmittel (6) mit einer ihm zugeordneten Lenkrolle (3) gekoppelt ist und wobei die Schaltvorrichtung (5) derart angeordnet und mit dem zumindest einen Bremsmittel (6) gekoppelt ist, um die zumindest eine Lenkrolle (3) in einem ersten Zustand über das ihr zugeordnete Bremsmittel (6) zu bremsen und in einem zweiten Zustand die zumindest eine Lenkrolle (3) freizugeben,
**dadurch gekennzeichnet, dass**
die Schaltvorrichtung (5) eine zweistufige Feder aufweist, die als Federkörper mit einem zentralen Abschnitt und einer Mehrzahl von sternförmig angeordneten Armen (10) ausgebildet ist, welche sich zu den Lenkrollen (3) erstrecken.

2. Stuhl (1) nach Anspruch 1,
**dadurch gekennzeichnet,**
**dass** ein höhenverstellbarer Sitz (7) vorgesehen ist, welcher zur Höhenverstellung mit dem Fußkreuz (2) gekoppelt ist, wobei die Schaltvorrichtung (5) derart angeordnet und mit dem Bremsmittel (6) gekoppelt ist, um die zumindest eine Lenkrolle (3) abhängig von der Höhenverstellung in dem ersten Zustand über das ihr zugeordnete Bremsmittel (6) zu bremsen und in dem zweiten Zustand die zumindest eine Lenkrolle (3) freizugeben.

3. Stuhl (1) nach Anspruch 2,
**dadurch gekennzeichnet,**
**dass** der Sitz (7) zur Höhenverstellung über eine Federmechanik (8) mit dem Fußkreuz (2) gekoppelt ist.

4. Stuhl (1) nach Anspruch 3,
**dadurch gekennzeichnet,**
**dass** die Schaltvorrichtung (5) einen zentralen zu der Federmechanik (8) koaxialen Abschnitt aufweist, der die Federmechanik (8) umfänglich, insbesondere vollständig, umgibt.

5. Stuhl (1) nach einem der Ansprüche 3 oder 4,
**dadurch gekennzeichnet,**
**dass** der Sitz (7) einen Sitzträger (21) mit einer Sitzverstellmechanik (9) aufweist, wobei die Federmechanik (8) die Sitzverstellmechanik (9) mit dem Fußkreuz (2) koppelt.

6. Stuhl (1) nach einem der Ansprüche 3 bis 5,
**dadurch gekennzeichnet,**
**dass** die Federmechanik (8) eine Gasdruckfeder aufweist.

7. Stuhl (1) nach einem der Ansprüche 2 bis 6,
**dadurch gekennzeichnet,**
**dass** der Abstand zwischen dem Sitz (7) und dem Fußkreuz (2) in dem ersten Zustand größer ist als in dem zweiten Zustand.

8. Stuhl (1) nach einem der vorstehenden Ansprüche,
**dadurch gekennzeichnet,**
**dass** die Wegrollschutzmechanik (4) mehrere mit der Schaltvorrichtung (5) gekoppelte Bremsmittel (6) aufweist, um mehrere Lenkrollen (3), insbesondere gleichzeitig, über die Bremsmittel (6) zu bremsen.

9. Stuhl (1) nach einem der vorstehenden Ansprüche,
**dadurch gekennzeichnet,**
**dass** sich jeweils ein Arm (10) zu jeweils einer Lenkrolle (3) erstreckt.

10. Stuhl (1) nach einem der vorstehenden Ansprüche,
**dadurch gekennzeichnet,**
**dass** das Bremsmittel (6) eine Führung (14) und ein Reibelement (13) aufweist, wobei die Führung (14) in oder auf dem Fußkreuz (2) vorgesehen ist und das Reibelement (13) in der Führung (14), insbesondere von der Schaltvorrichtung von au-ßen verdeckt, angeordnet ist.

11. Stuhl (1) nach einem der vorstehenden Ansprüche,
**dadurch gekennzeichnet,**
**dass** ein Abstand zwischen dem Sitz (7) und einer gemeinsamen Ebene der Lenkrollen (3), insbesondere stufenlos, in einem Bereich zwischen 0,3 m und 1 m, insbesondere zwischen 0,4 m und 0,9 m, bevorzugt zwischen 0,4 und 0,8 m, einstellbar ist.

12. Stuhl (1) nach einem der vorstehenden Ansprüche,
**dadurch gekennzeichnet,**
**dass** die zweistufige Feder als Totpunktfeder und/oder Membranfeder ausgebildet ist.

## Claims

1. Chair (1), in particular highchair,
comprising a star base (2) to which a plurality of castors (3) are attached,
comprising a roll-off protection mechanism (4), which has a central switching device (5) and at least one braking means (6), the at least one braking means (6) being coupled to a castor (3) assigned thereto, and the switching device (5) being arranged and coupled to the at least one braking means (6) so as to brake the at least one castor (3) via the braking means (6) assigned thereto in a first state and to release the at least one castor (3) in a second state,
**characterised in that** the switching device (5) includes a two-stage spring which is formed as a spring body having a central portion and a plurality of radially arranged arms (10) which extend to the castors (3).

2. Chair (1) according to claim 1,
**characterised**
**in that** a height-adjustable seat (7) is provided and is coupled to the star base (2) for height adjustment, the switching device (5) being arranged and coupled to the braking means (6) so as to brake the at least one castor (3) via the braking means (6) assigned thereto as a function of the height adjustment in the first state and to release the at least one castor (3) in the second state.

3. Chair (1) according to claim 2,
**characterised**
**in that** the seat (7) is coupled to the star base (2) via a spring mechanism (8) for height adjustment.

4. Chair (1) according to claim 3,
**characterised**
**in that** the switching device (5) has a central portion, which is coaxial with the spring mechanism (8) and peripherally encloses the spring mechanism (8), in particular completely.

5. Chair (1) according to either claim 3 or claim 4,
**characterised**
**in that** the seat (7) has a seat support (21) comprising a seat adjustment mechanism (9), the spring mechanism (8) coupling the seat adjustment mechanism (9) to the star base (2) .

6. Chair (1) according to any of claims 3 to 5,
**characterised**
**in that** the spring mechanism (8) includes a gas pressure spring.

7. Chair (1) according to any of claims 2 to 6,
**characterised**
**in that** the distance between the seat (7) and the star base (2) is greater in the first state than in the second state.

8. Chair (1) according to any of the preceding claims,
**characterised**
**in that** the roll-off protection mechanism (4) includes a plurality of braking means (6) coupled to the switching device (5), so as to brake a plurality of castors (3), in particular simultaneously, via the braking means (6).

9. Chair (1) according to any of the preceding claims,
**characterised**
**in that** one arm (10) extends to each castor (3).

10. Chair (1) according to any of the preceding claims,
**characterised**
**in that** the braking means (6) includes a guide (14) and a friction element (13), the guide (14) being provided in or on the star base (2) and the friction element (13) being arranged in the guide (14), in particular covered from the outside by the switching device.

11. Chair (1) according to any of the preceding claims,
**characterised**
**in that** a distance between the seat (7) and a shared plane of the castors (3) is adjustable, in particular continuously, in a range between 0.3 m and 1 m, in particular between 0.4 and 0.9 m, preferably between 0.4 and 0.8 m.

12. Chair (1) according to any of the preceding claims,
**characterised**
**in that** the two-stage spring is formed as a dead-centre spring and/or diaphragm spring.

## Revendications

1. Chaise (1), en particulier chaise haute,
avec un piétement (2) sur lequel sont montées plusieurs roulettes pivotantes (3),
avec un mécanisme anti-roulement (4) qui présente un dispositif de commutation central (5) ainsi qu'au moins un moyen de freinage (6), ledit au moins un moyen de freinage (6) étant couplé à une roulette pivotante (3) qui lui est associée et le dispositif de commutation (5) étant disposé et couplé audit au moins un moyen de freinage (6) de manière à freiner ladite au moins une roulette pivotante (3) dans un premier état par l'intermédiaire du moyen de freinage (6) qui lui est associé et à libérer ladite au moins une roulette pivotante (3) dans un deuxième état,
**caractérisée en ce**
**que** le dispositif de commutation (5) présente un ressort à deux étages qui est réalisé sous la forme d'un corps élastique avec une section centrale et une pluralité de bras (10) disposés en étoile qui s'étendent vers les roulettes pivotantes (3).

2. Chaise (1) selon la revendication 1,
**caractérisée en ce**
**qu'**il est prévu un siège (7) réglable en hauteur, qui est couplé au piétement (2) pour le réglage en hauteur, le dispositif de commutation (5) étant disposé et couplé au moyen de freinage (6) de manière à freiner ladite au moins une roulette pivotante (3) en fonction du réglage en hauteur dans le premier état par l'intermédiaire du moyen de freinage (6) qui lui est associé et à libérer ladite au moins une roulette pivotante (3) dans le deuxième état.

3. Chaise (1) selon la revendication 2,
**caractérisée en ce**
**que** pour le réglage en hauteur, le siège (7) est couplé au piétement (2) par un mécanisme à ressort (8).

4. Chaise (1) selon la revendication 3,
**caractérisée en ce**
**que** le dispositif de commutation (5) présente une section centrale coaxiale au mécanisme à ressort (8), qui entoure le mécanisme à ressort (8) sur sa périphérie, en particulier complètement.

5. Chaise (1) selon l'une des revendications 3 ou 4, **caractérisée en ce**
**que** le siège (7) présente un support de siège (21) avec un mécanisme de réglage de siège (9), le mécanisme à ressort (8) couplant le mécanisme de réglage de siège (9) au piétement (2).

6. Chaise (1) selon l'une des revendications 3 à 5, **caractérisée en ce**
**que** le mécanisme à ressort (8) présente un ressort à gaz.

7. Chaise (1) selon l'une des revendications 2 à 6, **caractérisée en ce**
**que** la distance entre le siège (7) et le piétement (2) est plus grande dans le premier état que dans le deuxième état.

8. Chaise (1) selon l'une des revendications précédentes, **caractérisée en ce**
**que** le mécanisme anti-roulement (4) présente plusieurs moyens de freinage (6) couplés au dispositif de commutation (5) pour freiner plusieurs roulettes pivotantes (3), en particulier simultanément, par l'intermédiaire des moyens de freinage (6).

9. Chaise (1) selon l'une des revendications précédentes, **caractérisée en ce**
**qu'**un bras (10) s'étend vers chaque roulette pivotante (3).

10. Chaise (1) selon l'une des revendications précédentes, **caractérisée en ce**
**que** le moyen de freinage (6) présente un guide (14) et un élément de friction (13), le guide (14) étant prévu dans ou sur le piétement (2) et l'élément de friction (13) étant disposé dans le guide (14), en particulier caché de l'extérieur par le dispositif de commutation.

11. Chaise (1) selon l'une des revendications précédentes, **caractérisée en ce**
**qu'**une distance entre le siège (7) et un plan commun des roulettes pivotantes (3) est réglable, en particulier en continu, dans une plage comprise entre 0,3 m et 1 m, en particulier entre 0,4 m et 0,9 m, de préférence entre 0,4 et 0,8 m.

12. Chaise (1) selon l'une des revendications précédentes, **caractérisée en ce**
**que** le ressort à deux étages est réalisé sous la forme d'un ressort à point mort et/ou d'un ressort à membrane.
